# EUROPEAN PATENT SPECIFICATION

(11) **EP 1 085 389 B1**
(45) Date of publication and mention of the grant of the patent: **12.05.2004**
(21) Application number: 00307935.7
(22) Date of filing: 13.09.2000
(51) Int. Cl.: G05B 19/418

(54) **Robot and machine linked system**
Verbundsystem aus Roboter und Machine
Couplage d'un robot et d' une machine

(30) Priority: 13.09.1999 JP 25960199
(43) Date of publication of application: 21.03.2001
(73) Proprietor: Fanuc Ltd, Minamitsuru-gun, Yamanashi 401-0597 (JP)
(72) Inventor: Terada, Akihiro, Fujiyoshida-shi, Yamanashi 403-0005 (JP); Kosaka, Tetsuya, Oshino-mura, Yamanashi 401-0511 (JP); Kamiguchi, Masao, Minamitsuru-gun, Yamanashi 401-0301 (JP)
(74) Representative: Billington, Lawrence Emlyn

(56) References cited:
- EP-A- 0 024 821
- EP-A- 0 558 030
- EP-A- 0 940 739
- GB-A- 2 299 418
- PATENT ABSTRACTS OF JAPAN vol. 016, no. 445 (P-1422), 17 September 1992 (1992-09-17) & JP 04 155406 A (FANUC LTD), 28 May 1992 (1992-05-28)

## Description

The present invention relates to industrial machines such as machine tools and injection molding machines. In particular, it relates to a system that is equipped with a robot and that operates by linking a machine and the robot.

Recently, with the introduction of factory automation, methods of manufacturing products without human intervention by using robots to transport and transfer materials, products, assemblies, etc. (hereafter referred to as "work") worked by machine tools, injection molding machines, or other machines have become commonplace. In case of a machine equipped with a robot, operations are automated: work is supplied to the machine by the robot and processed work is taken out, transported, and handed over to the next process by the robot. In so doing, the machine and robot operate cooperatively in synchronization.

In case of a conventional machine equipped with a robot, a machine controller and a robot controller are independent of each other. The operations of the machine and robot are programmed into respective controllers and the machine and robot operate cooperatively by exchanging signals. The machine is operated by the machine controller and the robot attached to the machine is operated by the robot controller. Motion programs must be installed on the robot to control its motions. Conventionally, the calibration for associating the coordinate systems of the machine and robot to coordinate the relative position of the machine and robot as well as monitoring, diagnosis, and the like with respect to robot motions can be performed only from the robot controller.

In a production system that includes a machine and robot, it is inconvenient that the robot which work in cooperation with the machine cannot be operated from the machine controller.

Various attempts have been made to make more convenient the operational link between a machine and a robot, in particular between their controllers. Examples of relevant prior art are to be found in EP-A-0 558 030, JP 04 155406 A, GB-A-2 299 418, EP-A-0 940 739, and in particular EP-A-0 024 821 which discloses a machine in the form of a lathe having a controller, a robot having a controller and installed on or arranged near the lathe, and communication means in the form of a data transfer line which connects the controller of the robot and the controller of the lathe.

An object of the present invention is to provide a robot and machine linked system to improve the operability of the robot by allowing the robot attached to a machine, such as an injection molding machine, to be operated from the machine controller.

According to the present invention there is provided a robot and machine linked system comprising: a machine which has a controller and display/input means; a robot which has a controller and is installed on or arranged near the machine; and communication means which connects the controller of the robot and the controller of the machine, characterised in that the controller of the machine has the capability to create or change robot programs which are located in the machine controller or in the robot controller, which robot programs are to control the robot from the robot controller, and has robot operation pattern selecting means for selecting any one of a plurality of movement patterns of an end effector, of the robot, which are set in advance, and a display device to display the selected moving pattern.

According to one development, the controller of the machine has the capability to transfer robot programs created or changed on the controller of the machine to the controller of the robot via the communication means.

According to another development, the display/input means of the machine is operable to enter data to be incorporated into robot programs into the controller of the machine, and the controller of the machine is operable to transfer the entered data to the controller of the robot via the communication means, to enable the controller of the robot to create or change programs based on that data.

Then the robot will be run and controlled by these programs.

The above described machine is an preferably injection molding machine. The display/input means provided on the injection molding machine may contain means for displaying pictures that represent molds and pictures that represent platens, means for selecting robot teach points displayed on the above described display/input means, and means for entering the coordinate values of the selected teach points so that the data necessary for the motion programs of the robot can be entered. The means for entering the above described coordinate values may be any of the following: means for entering them numerically, means for indicating the locations of teach points on the screen with a touch pen or mouse pointer and entering the coordinate values based on the indicated locations on the screen, means for indicating the locations of teach points on the screen with a touch panel mounted on the display/input means and entering the coordinate values based on the indicated locations of the teach points on the screen, means for moving teach points on the screen and entering the coordinate values based on the indicated locations of the teach points on the screen, and means for moving the robot and entering the coordinate values based on the current position of the robot.

Besides, the controller of the above described injection molding machine may comprise means for setting the mold opening completion position and means for changing the molding removal position of the above described robot in accordance with the amount of change in the set values of the mold opening completion position. It may further comprise means for setting the advanced position of the ejector and means for changing the molding removal position of the above described robot in accordance with the amount of change in the set values of the advanced position of the ejector. This makes it possible to change the motion pattern of the robot freely in accordance with setting changes in the mold opening completion position and in the advanced position of the ejector.

For a better understanding of the invention, and to show how the same may be carried into effect, reference will now be made, by way of example, to the accompanying drawings, in which:-
FIG. 1 is an explanatory drawing which outlines an injection molding machine system equipped with a robot according to one embodiment of the present invention;
FIG. 2 is a flow chart of a calibration process executed by a processor in the controller of the injection molding machine to associate coordinate systems of the robot and injection molding machine, according to the above described embodiment;
FIG. 3 is a flow chart of a teach settings for the motion program of the robot made by the processor in the controller of the injection molding machine, according to the above described embodiment;
FIG. 4 is a flow chart of a parameter setting for molding removal according to the above described embodiment;
FIG. 5 is an alternative flow chart of the parameter setting for molding removal according to the above described embodiment;
FIG. 6 is a flow chart of a parameter change process of the removal pattern in case of changes in a mold opening completion position;
FIG. 7 is a flow chart of the parameter change process of the removal pattern in case of changes in the advanced position of the ejector;
FIG. 8 is a flow chart of a robot monitoring process executed by the processor in the controller of the injection molding machine, according to the above described embodiment;
FIG. 9 is a flow chart of a manual feed operation of the robot executed by the processor in the controller of the injection molding machine, according to the above described embodiment;
FIG. 10 is a flow chart of a diagnostic process of the robot executed by the processor in the controller of the injection molding machine, according to the above described embodiment;
FIG. 11 shows a main menu screen of items related to robot operation displayed on a display unit on the controller of the injection molding machine, according to the above described embodiment;
FIG. 12 shows a mold database display screen displayed on the display unit on the controller of the injection molding machine, according to the above described embodiment;
FIG. 13 is a drawing showing examples of moldings removal patterns displayed on the display unit on the controller of the injection molding machine, according to the above described embodiment;
FIG. 14 shows a moldings removal pattern setting screen according to the above described embodiment;
FIG. 15 shows another moldings removal pattern setting screen according to the above described embodiment;
FIG. 16 shows the display screen of travel patterns after molding removal that appears on the display unit on the controller of the injection molding machine, according to the above described embodiment;
FIG. 17 shows a gate cutting pattern display screen that appears on the display unit on the controller of the injection molding machine, according to the above described embodiment;
FIG. 18 shows a palletizing pattern display screen that appears on the display unit on the controller of the injection molding machine, according to the above described embodiment;
FIG. 19 shows an insert pattern display screen that appears on the display unit on the controller of the injection molding machine, according to the above described embodiment; and
FIG. 20 shows a robot monitoring screen that appears on the display unit on the controller of the injection molding machine, according to the above described embodiment;

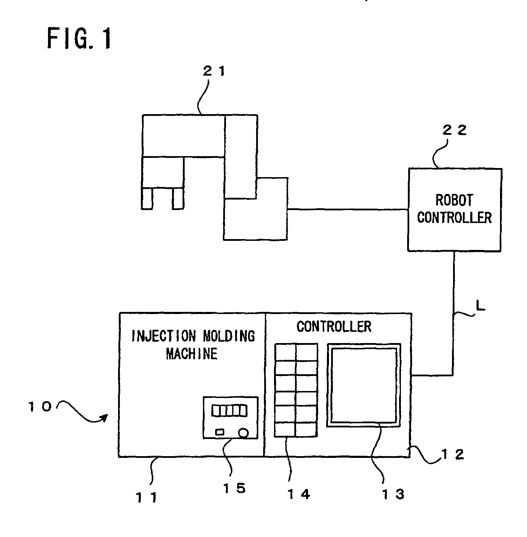

FIG. 1 is a schematic diagram of one embodiment of the present invention. This embodiment uses an injection molding machine as an example of the machine equipped with a robot mounted on or near it.

Unlike general machinery such as machine tools, injection molding machines process resin pellets, which are fed continuously and thus are not transported to the injection molding machines by robots. With injection molding machines, the work handled by robots include moldings. Systems are employed in which a robot removes moldings from molds and transports them to a molding collection site. In some cases, the robot also palletizes the removed moldings on pallets positioned at the molding collection site. In the case of insert molding, which requires inserts to be fitted in molds in advance, the robot is sometimes used to fit the inserts into the mold (in this case, the inserts are regarded as work).

For an injection molding machine equipped with a robot (mounted on or near it) that performs motions such as molding removal from molds, transport, palletizing, and installation of inserts, various operations including the installation of the motion programs executed by the robot, calibration for associating the coordinate systems of the robot and injection molding machine, and monitoring and diagnosis of robot motions are conventionally performed from the controller of the robot.

Since the robot and injection molding machine operate in cooperation with each other, it is inconvenient that the robot can be operated only on the robot side and that the injection molding machine can be operated only on the side of the injection molding machine. Also, it is a problem that a control panel for operating the equipment, means for entering various data and commands, display unit, etc. must be provided separately for both robot and injection molding machine.

To solve these problems, the present invention provides the capability to operate the robot attached to an injection molding machine even from the controller of the injection molding machine.

Referring to FIG. 1, reference numeral 11 denotes a main unit of an injection molding machine 10 and reference numeral 12 denotes a controller of the injection molding machine 10. The controller 12 of the injection molding machine 10 and a controller 22 of a robot 20 attached to the injection molding machine 10 are connected by communication means such as Ethernet L. The robot controller 22 controls a working part 21 of the robot attached to the injection molding machine 10.

The controller 12 of the injection molding machine 10 comprises a processor, memory such as a ROM or RAM, input/output interface, etc. It further comprises a display unit 13 equipped with a touch panel which constitutes display/input means for the controller of the injection molding machine; input means 14 such as a keyboard for entering various data, set values, and commands; and a control panel 15 for operating the main unit 11 of the injection molding machine manually. Furthermore, the control panel 15 comprises a jog key and other manual robot operation means for manually operating the robot 20 attached to the injection molding machine, a Teach button for outputting teach commands, etc.

Besides, the controller 22 of the robot 20 also comprises a processor, memory such as a ROM or RAM, input/output interface, etc. to control the working part 21 of the robot 20 according to taught programs.

The configuration of the injection molding machine 10 equipped with the above described robot 20 is almost identical to conventional ones. The differences, as described above, are that the control panel of the injection molding machine is equipped with manual operation means such as a jog key for operating the robot and teaching means and that the controller 12 of the injection molding machine 10 stores various programs for controlling the robot 20.

Now operations performed by the controller 12 of the injection molding machine, including programming of robot 20 motions and calibration, will be described below.

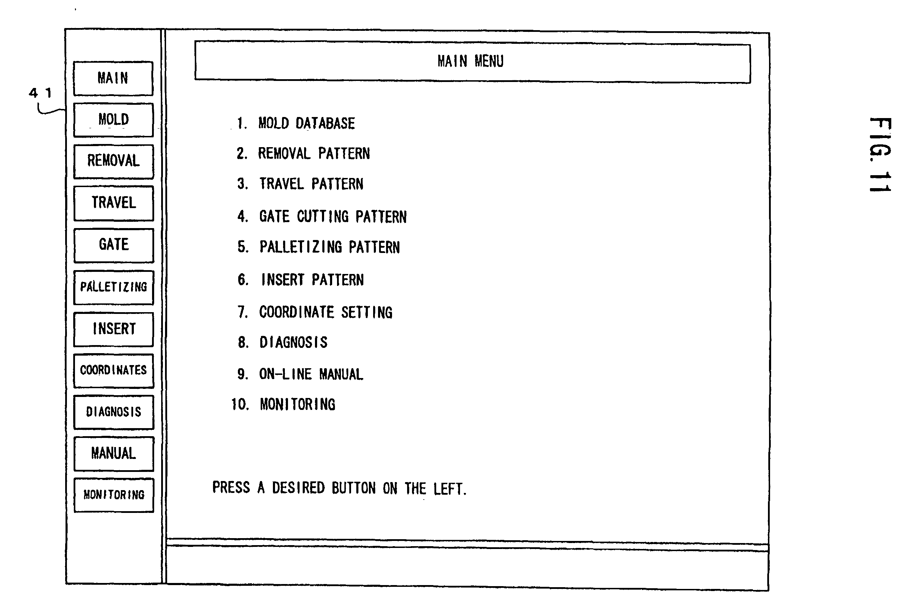

As the operator turns on the injection molding machine 10 equipped with the robot 20 and selects Main Menu, the display screen of the display unit 13 equipped with a touch panel displays the Main Menu screen as shown in FIG. 11. Then, the processor in the controller 12 of the injection molding machine checks repeatedly whether any of the mode selection buttons 41 -- Mold, Coordinates, Diagnosis, Manual, and Monitor -- displayed on this display screen has been pressed and selected. The other mode selection buttons 41 -- Remove, Travel, Gate, Palletizing, and Insert -- are disabled on the Main Menu screen.

### [Calibration processing]

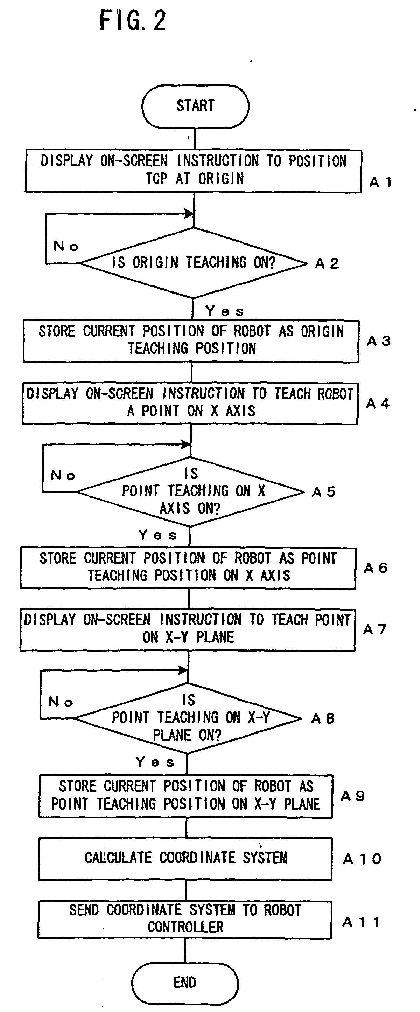

First, as the operator presses the Coordinates mode selection button 41 to perform calibration for associating the coordinate systems of the robot and injection molding machine, the processor in the controller 12 of the injection molding machine initiates the processing shown in FIG. 2.

The processor displays an on-screen instruction on the display unit 13 prompting the operator to position the TCP (tool center point) at the origin of the robot coordinate system (Step A1). Then, based on the on-screen instruction, the operator positions the TCP of the robot 20 manually at the desired origin of the robot coordinate system by manipulating the manual operation means such as the jog key for manual feed of the robot installed on the control panel 15. In this embodiment, the operator positions the TCP at the center of the sprue in the stationary mold half, which is designated as the origin, and presses the Teach button on the control panel 15. The processor detects this (Step A2), stores the current position of the robot as the origin teaching position (Step A3), and displays an on-screen instruction to teach the robot a position on an axis, to be designated as X axis, of the robot coordinate system (Step A4).

Following this on-screen instruction, the operator teaches a position on the X axis by feeding the robot manually (Step A5). The processor stores the current position of the robot as the point teaching position on the X axis (Step A6) and displays an on-screen instruction on the display unit 13 prompting the operator to teach a point on a plane, to be designated as X-Y plane, of the robot coordinate system (Step A7).

The operator positions the TCP at a point on the X-Y plane by feeding the robot manually and presses the Teach button. When the processor detects this (Step A8), it stores the current position of the robot as the point teaching position on the X-Y plane, calculate the coordinate system of the robot (Step A10), based on the origin teaching position, the point teaching position on the X axis, and the point teaching position on the X-Y plane, which are stored, and sends this coordinate system to the robot controller 22 through the Ethernet L (Step A11).

When the robot controller 22 receives this coordinate system, it sets this information in itself as the user coordinate system of the robot.

The above is the calibration performed by the controller 12 of the injection molding machine to associate the coordinate systems of the injection molding machine and the robot attached to it.

### [Motion patterns of robot]

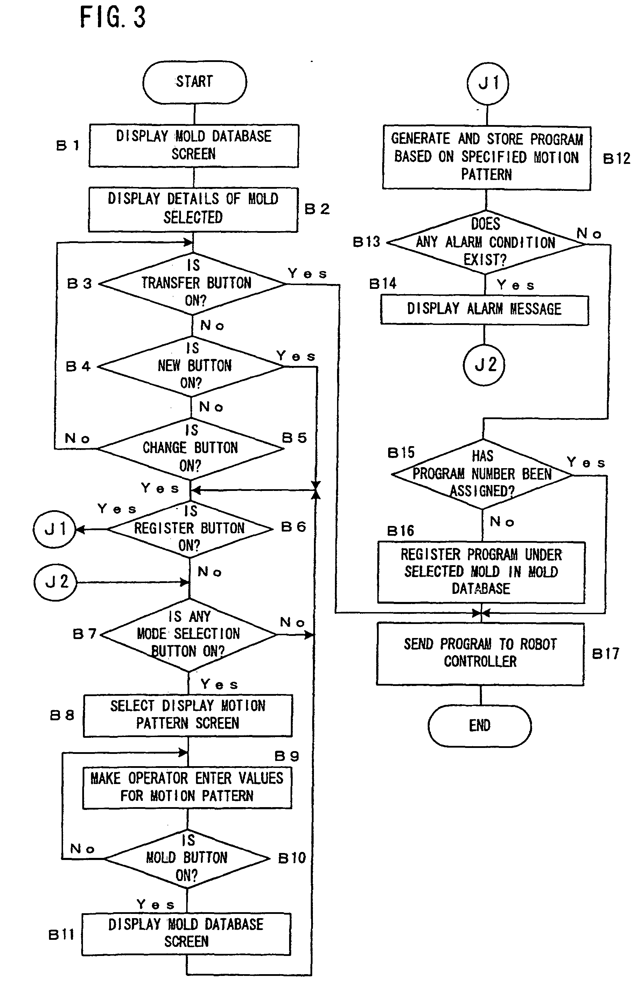

Now description will be given about how to generate and register a program for molding removal motions of the robot 20. As the operator presses (selects) the Mold button among the mode selection buttons 41, the processor in the controller 12 of the injection molding machine initiates the processing shown in FIG. 3.

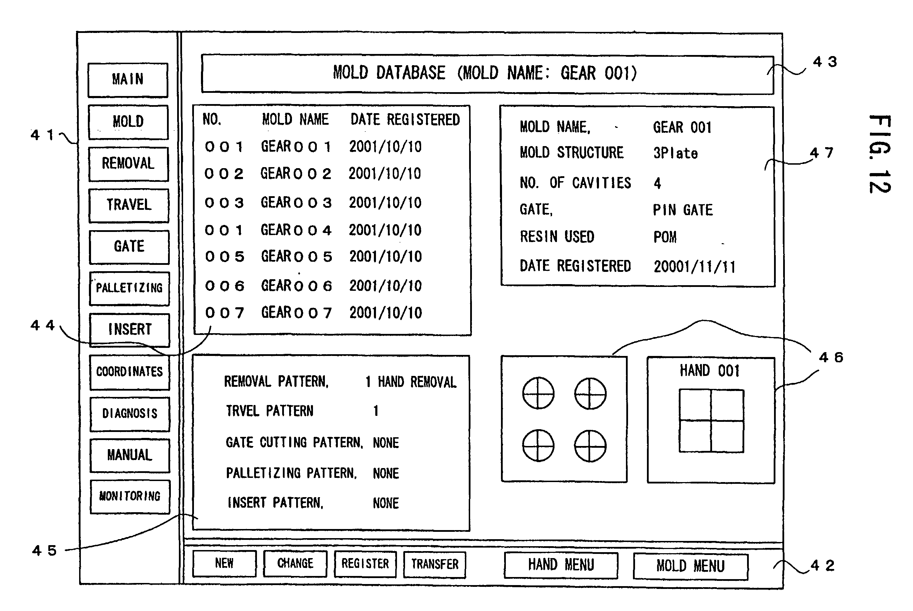

The processor in the controller 12 of the injection molding machine displays mold database information stored in the nonvolatile memory portion or the like of the memory, on the display unit 13 as shown in FIG. 12 (Step B1). The mold database stores the molding conditions for use in producing moldings on the injection molding machine, resin used, motion programs of the robot described later, motion programs of the injection molding machine, etc., associating them with molds.

The items displayed based on this mold database include, a title 43, Mold Name/Date Registered area 44, motion pattern area 45 which shows possible robot motions, mold geometry area 46 which shows approximate shapes of molds, and summary area 47 of the mold selected. Besides, the mode selection buttons 41 and command buttons 42 are displayed.

When the operator presses a mold name displayed in the Mold Name/Date Registered area 44 and selects a mold, the mold geometry area 46 displays the shape of the mold, and the summary area 47 displays the pre-registered summary of the selected mold, including Mold Name, Mold Structure, Number of Cavities, Gate Geometry, Resin Used, and Date Registered. Besides, the title area 43 additionally displays the name of the mold selected. Also, the motion pattern area 45 displays the number that represents a motion pattern if any robot motion pattern has already been programmed for this mold and the program number has been registered in the database or it displays "None" if no such pattern has been registered (Step B2).

In the example of FIG. 12, the mold name "Gear 001" has been selected. For this mold, the first pattern program has been registered as a moldings removal pattern and the first pattern program has also been registered as a travel pattern, as can be seen from the figure.

Based on this screen display, the operator determines whether it is necessary to generate and register a motion program for the robot 20 or not. On the other hand, the processor in the controller 12 of the injection molding machine checks repeatedly whether or not the Transfer, New, or Change command button 42 has been selected (Steps B3 to B5).

If a robot 20 motion program necessary for the selected mold has already been registered, the operator presses the Transfer command button 42. When the processor detects that the Transfer button has been pressed (Step B3), it goes to Step B17 where it sends the robot 20 motion program registered for the selected mold to the robot controller 22 through the Ethernet L.

If no pattern has been registered in the motion pattern area 45 and a new motion pattern program needs to be created, the operator presses the New command button 42 in order to create a new motion pattern program. Or if a motion pattern has already been registered, the operator may press the Change command button to change this motion pattern. When the processor detects either action, i.e., the press of the New button (Step B4) or Change button (Step B5), it checks repeatedly whether or not the Register command button is pressed next (Step 6) or whether any of the mode selection buttons 41 -- Remove, Travel, Gate, Palletizing, or Insert -- is pressed or not (Step B7).

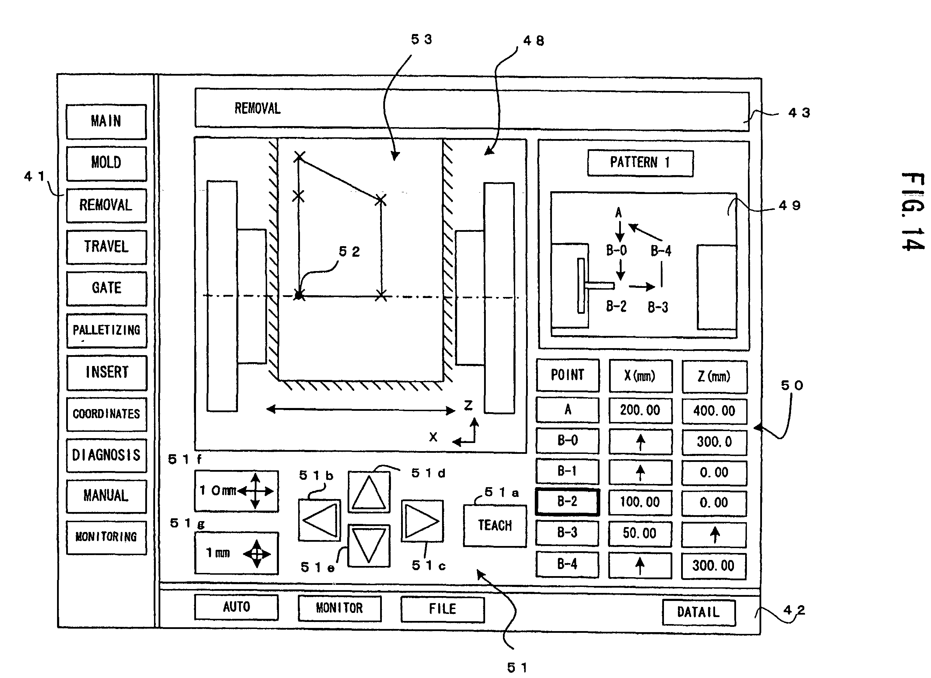

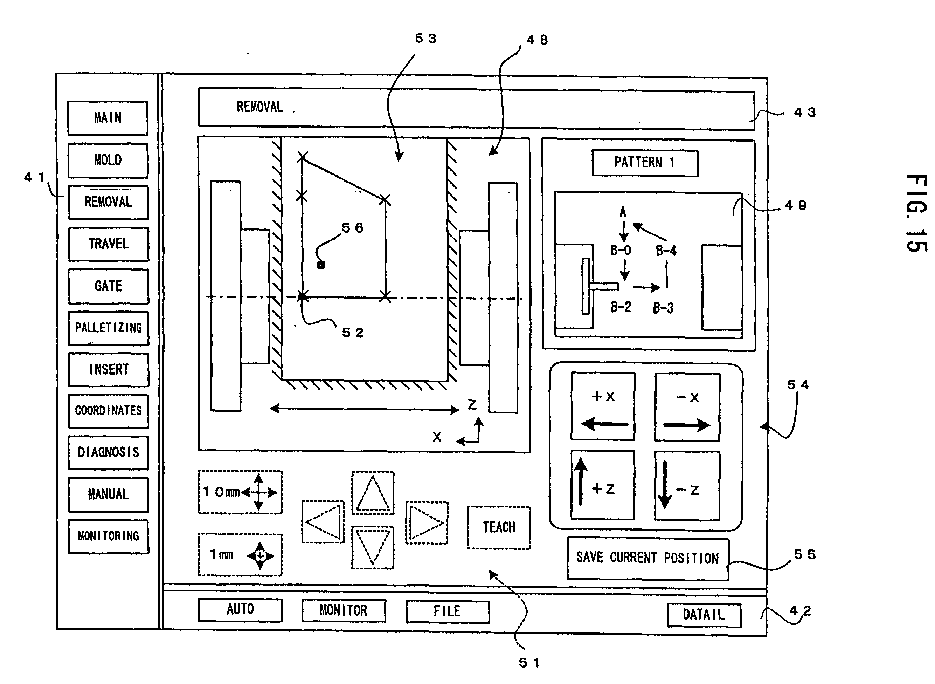

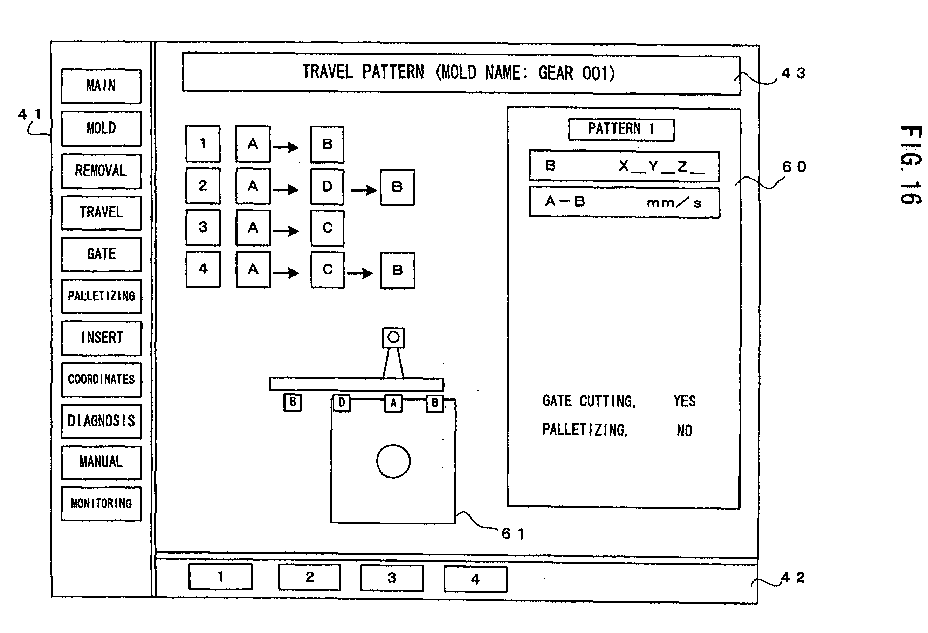

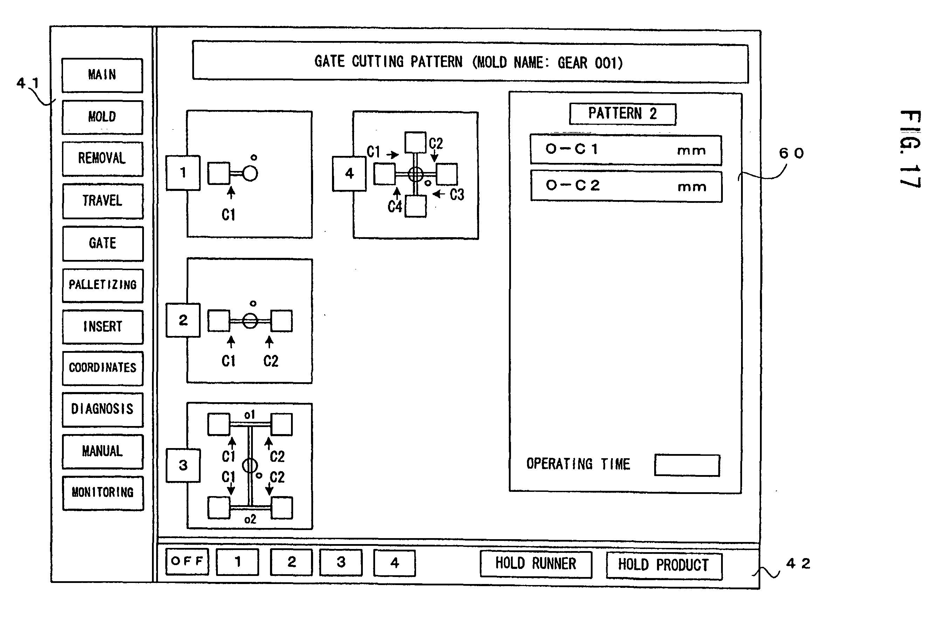

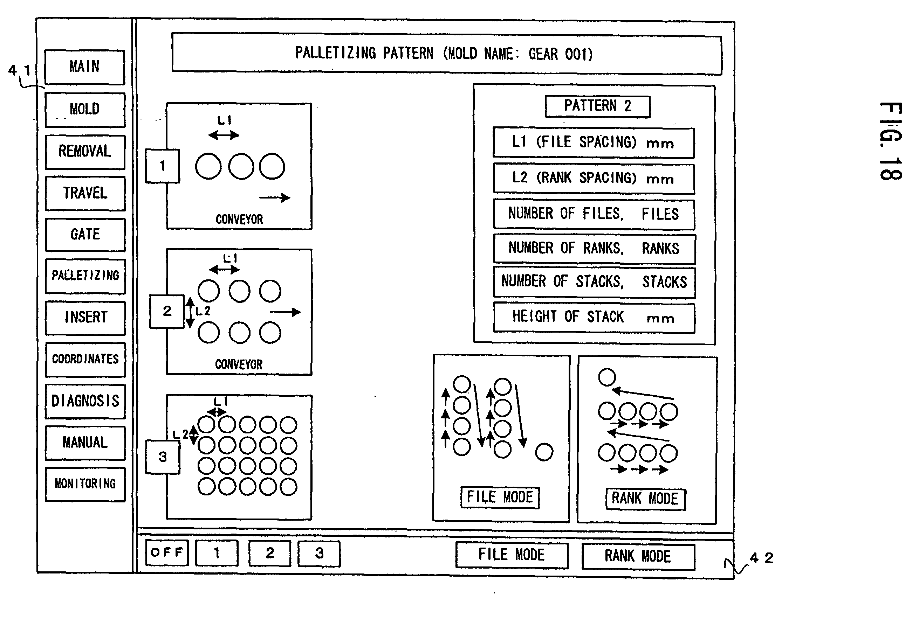

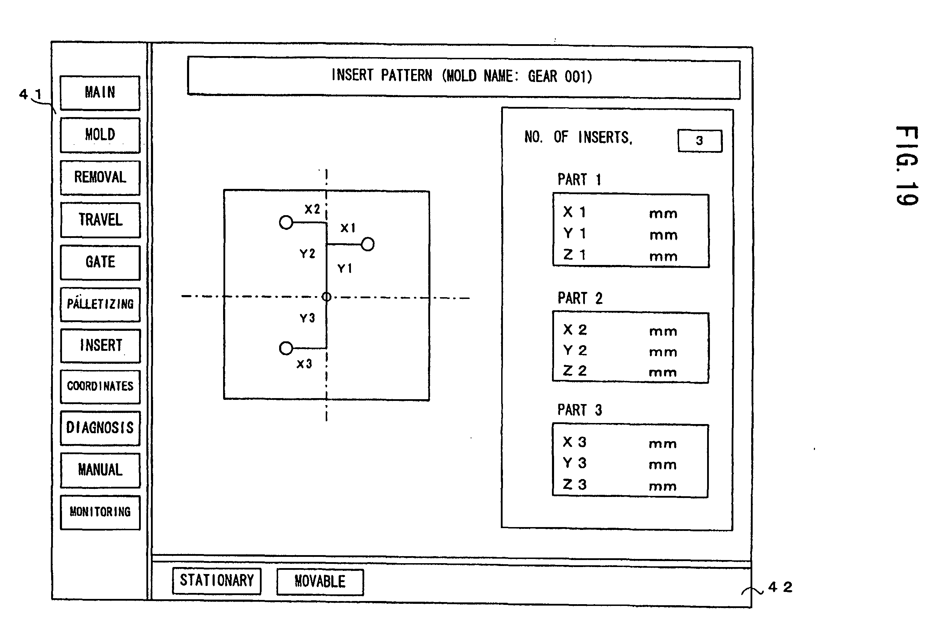

When the operator presses a desired mode selection button 41 to create or change a motion program, the processor displays the motion pattern setting screen on the display unit 13 to create a program that corresponds to the pressed mode selection button 41. Specifically, it displays the Removal pattern screen shown in FIG. 14 (or FIG. 15), Travel pattern screen shown in FIG. 16, Gate Cutting pattern screen shown in FIG. 17, Palletizing pattern screen shown in FIG. 18, or Insert pattern screen shown in FIG. 19, respectively, on the display unit 13 (Step B8) when the Remove, Travel, Gate, Palletizing, or Insert button is pressed.

Then, the operator selects the desired motion pattern from the displayed screen, enters values for the parameters required for the motion pattern (Step B9), and once he/she has finished entering data, presses the Mold mode selection button 41 (Step B10). The processor executes parameter inputting processing while checking to see if the Mold button is pressed.

### [Patterns of removal of moldings from molds]

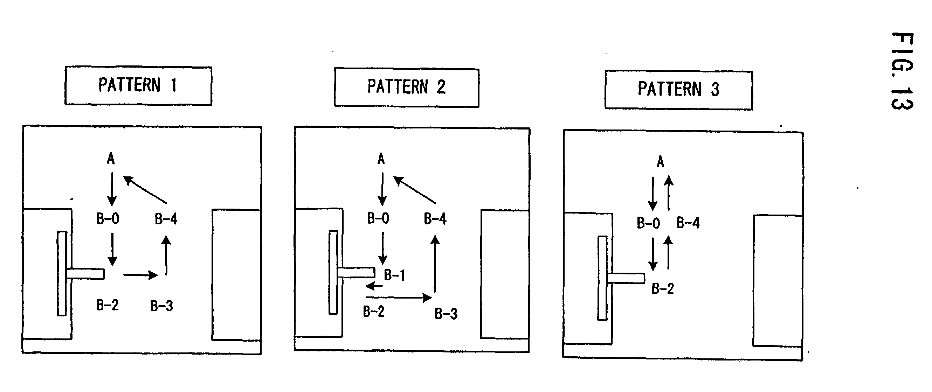

FIG. 13 shows the robot 20 motion (travel path of TCP) patterns for the removal of moldings from molds according to this embodiment. There are three patterns according to this embodiment.

The first pattern comprises the following motions. The TCP moves from a start position A to an approach waiting position B-0 and waits there for a Start Approach command. When a Start Approach command is issued, the TCP moves from the approach waiting position B-0 to a position B-2 for removal of moldings and the robot picks up and holds the moldings by an end effector such as a hand or attraction gripper. After the removal of moldings, the TCP moves to a post-removal retract position B-3 and moves through a removal confirmation position B-4 to the start position A.

The second pattern comprises the following motions. The TCP moves from a start position A to a approach waiting position B-0 and waits there for a Start Approach command. When a Start Approach command is issued, the TCP moves from the approach waiting position B-0 to a position B-1 for waiting removal of moldings and waits there for a Start Removal command. When a Start Removal command is issued, the TCP moves from the position B-1 for waiting removal of moldings to a position B-2 for removal of moldings. There the robot picks up and holds the moldings by an end effector such as a hand or attraction gripper. After molding removal, the TCP moves to a post-removal retract position B-3 and moves through a removal confirmation position B-4 to the start position A.

The third pattern comprises the following motions. The TCP moves from a start position A to a approach waiting position B-0 and waits there for a Start Approach command. When a Start Approach command is issued, the TCP moves from the approach waiting position B-0 to a position B-2 for removal of moldings. There the robot picks up and holds the moldings by an end effector such as a hand or attraction gripper. Then, the TCP moves through a removal confirmation position B-4 to the start position A.

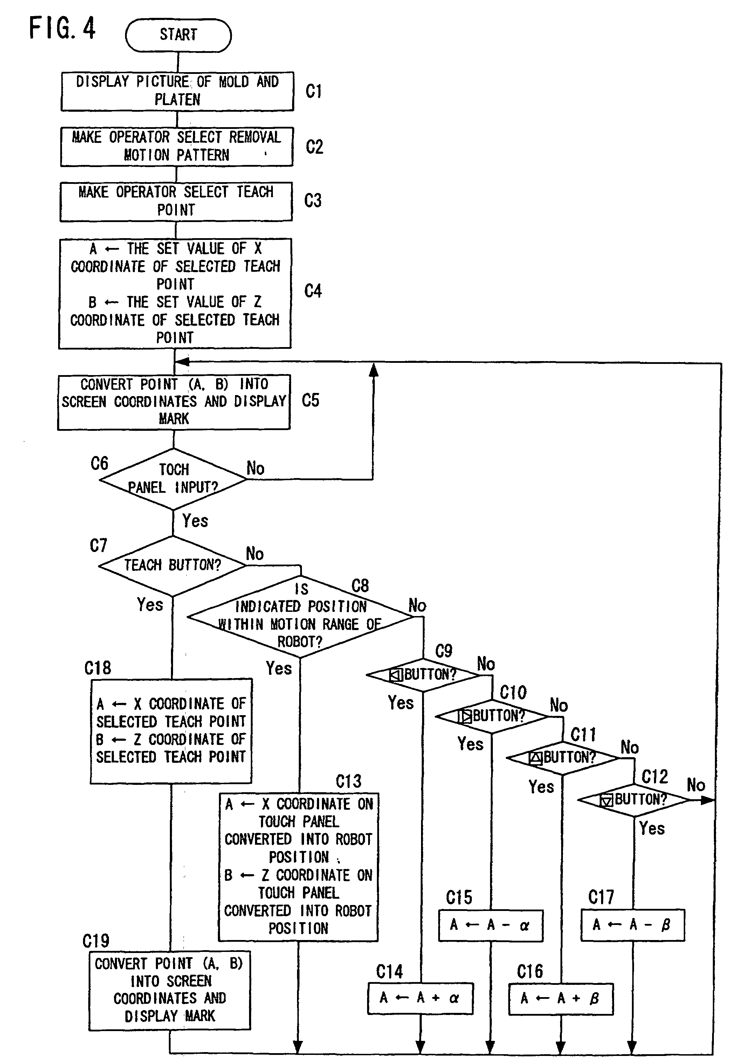

If the operator selects the Remove mode selection button 41, the processor detects this in Step B7 and performs the parameter setting process for removal of moldings shown by a flow chart in FIG. 4. First, it displays the Removal pattern setting screen shown in FIG. 14. This screen displays the mode selection buttons 41, command button 42, and screen title 43 as well as a mold/platen picture display area 48, motion pattern display area 49, motion pattern parameter setting display area 50, and area of various control buttons for use in teaching (Step C1).

To select a motion pattern, the operator touches the pattern name display field of the motion pattern display area 49. Each time the operator touches this display field, any one of pattern names of the first to third patterns described above is displayed in turn. At first, the currently selected pattern is displayed.

The operator selects the motion pattern suitable to the mold among these kinds of motion patterns (Step C2) and sets the parameters needed to create a program that will make the robot perform the selected motion pattern. In other words, the operator sets the parameters that represent the coordinates of the start position, molding removal position, etc. of the selected motion pattern as well as the travel speeds between individual positions.

In the example of FIG. 14, the first motion pattern has been selected. Accordingly, the coordinates of the start position A, approach waiting position B-0, position B-2 for removal of moldings, post-removal retract position B-3, and removal confirmation position B-4 are displayed as parameters in the parameter setting area 50, prompting the operator to enter their values. The parameter setting area 50 displays the values that have already been entered.

The travel speed of the robot has been set in advance for each path and for each motion pattern, causing the robot to move according to the set value. It is also possible to allow the operator to set the travel speed. In that case, Travel Speed field is provided in parameter setting display area 50 to allow travel speed to be entered for each path: from the start position A to the approach waiting position B-0, from the approach waiting position B-0 to the position B-1 for waiting removal of moldings, from position A to position B-0, from position B-0 to position B-1 from position B-1 to position B-2, from position B-2 to position B-3, from position B-3 to position B-4, and from position B-4 to position A.

When the operator selects a teach point displayed on the parameter setting display area 50 (Step C3), the X coordinate value that has already been specified for the selected teach point is read into a variable A and the Z coordinate value is read into a variable B. The coordinate values are converted into a coordinate position (in this coordinate system, the horizontal direction corresponds to the X axis with the positive end pointing left and the vertical direction corresponds to the Z axis with the positive end pointing up) in the mold/platen picture display area 48 on the screen, and a mark 52 is displayed at that position (Steps C4 and C5).

In the example of FIG. 14, the position B-2 for removal of moldings has been selected as a teach point. In the coordinate system of the injection molding machine according to this embodiment, the X axis extends horizontally with the positive end pointing in the mold opening direction and the Z axis orthogonal to the X axis extends vertically with positive end pointing up. The coordinate system of the robot comprises X and Z axes which have the same direction as those of the coordinate system of the injection molding machine as well as a Y axis orthogonal to the X and Z axis.

The processor waits for a touch panel operation (Step C6). When the touch panel is operated, the processor checks in sequence to see if the Teach button 51a has been pressed, if a teach point has been indicated with a direct touch on a screen location, or if any of the buttons 51b to 51e has been pressed to move the above described mark 52 which represents a teach position on screen, leftward, rightward, up, or down (Steps C7 to C12). If the Left button 51b is pressed, the processor increases the variable A by a fixed amount a (Steps C9 and C14); if the Right button 51c is pressed, the processor decreases the variable A by the fixed amount α (Steps C10 and C15); if the Up button 51d is pressed, the processor increases the variable B by a fixed amount β (Steps C11 and C16); or if the Down button 51e is pressed, the processor decreases the variable B by the fixed amount β (Steps C12 and C17). Then the processor returns to Step C5 to move the mark 52 on the screen.

If a point is indicated by a touch on the touch panel in the area 53 which is located in the mold/platen picture display area 48 and which represents the motion range of the robot (Step C8), the processor converts the coordinates of the point indicated by the touch on the screen into X and Z coordinates, stores the variables A and B (Step C13), and returns to Step C5 where it moves the mark 52 that represents the teach point to the location indicated through the touch panel.

After repeating the above procedure, the operator presses the Teach button 51a (Step C7) when the coordinate position of the teach point is determined. Then the processor sets the variables A and B to the X and Z coordinates of the selected teach point (the position B-2 for removal of moldings in the example of FIG. 14), respectively, and displays them in the Selected Teach Point field in the parameter setting display area 50 (Step C18). Also, it displays the mark 52 by converting the variables A and B into screen coordinates (Step C19).

In the control button area 51 for teaching in FIG. 14, the buttons 51f and 51g are used to switch the fixed amount of travel for the mark 52: when the button 51f is selected, both the fixed amounts α and β used in Steps C14 to C17 described above are set to 10 mm and when the button 51g is selected, both the fixed amounts α and β are set to 1 mm.

To teach the positions of teach points, the operator can also select each of the teach points (A, B-0, B-1, B-2, B-3, and B-4) and enter values directly from the keyboard.

FIG. 15 shows another moldings removal pattern setting screen according to a second embodiment for teaching moldings removal patterns. In this embodiment, the operation moves the robot directly to teach it a moldings removal pattern.

For that purpose, the removal pattern setting screen is provided with the manual feed buttons 54 for moving the robot manually and a button 55 for giving an instruction to store the current position. The control button area 51 as shown in FIG. 14 is grayed out and disabled. Also, since the robot is moved directly and its TCP is positioned for teaching, the parameter setting display area 50 shown in the example of FIG. 14 is not provided.

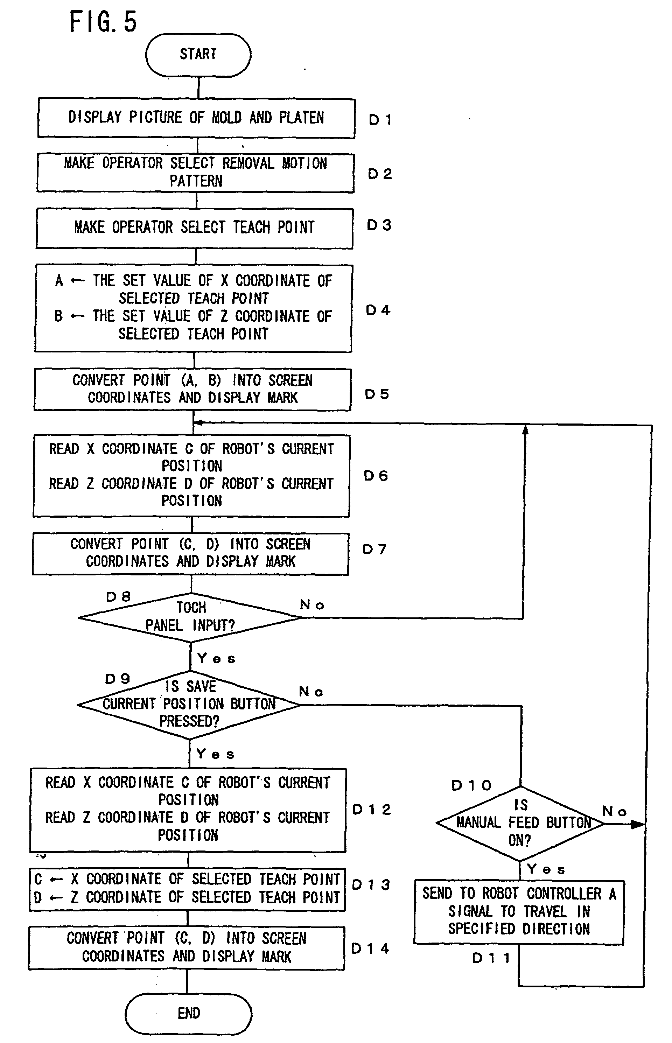

FIG. 5 is a flow chart of the parameter setting for moldings removal patterns according the second embodiment. Steps D1 to D5 are the same as the Steps C1 to C5 of the first embodiment shown in FIG. 4. Teach points are selected from the points (A, B-0, B-1, B-2, B-3, B-4, etc.) in the motion pattern display area 49.

Next, the processor reads the X coordinate C and Z coordinate D of the current position of the robot (the current position of the TCP), converts them into coordinates of the coordinate system set in the mold/platen picture display area 48, and displays the point 56 that represents the current position of the robot (Step D6 and D7). Incidentally, reference numeral 52 in FIG. 15 denotes the mark that represents the currently stored position of a selected teach point

The processor checks whether the touch panel has been operated (Step D8) or not. If it has not, the processor returns to Step D6 and repeats Steps D6 to D8. If the touch panel has been operated, the processor checks whether or not the button pressed is a Save Current Position button 55 or any of the buttons 54 that move the TCP of the robot in the X or Z direction (i.e., +X button, -X button, +Z button, or -Z button) (Steps D9 and D10). If it is any of the buttons 54 that move the robot, the processor sends to the robot controller a signal for moving the robot in the specified direction (Step D11). Then it returns to Step D6 where it determines the X coordinate C and Z coordinate D of the current position of the robot, converts them (C and D) into screen coordinates, and displays the mark 56 accordingly.

If any of the robot movement command buttons 54 has been further pressed, the processor repeats Steps D6 to D11 and indicates the current position of the robot by the mark 56 on screen. When the robot moves to the appropriate position, the operator presses the Save Current Position button 55 to store the current coordinates of the robot as a teach point (Step D9). The processor reads the X coordinate C and Z coordinate D of the current position of the robot (Step D12), stores the X coordinate and Z coordinate of the selected teach point as C and D, respectively (Step D13), converts this point (C, D) into screen coordinates, and displays them as the mark 52 that represents the position of the selected teach point. At this time, the mark 56 that represents the position of the robot coincides with the mark 52.

In this way, teach positions, which are parameters of a removal pattern, are set.

Specifically, in the case of the first pattern, the start position A, approach waiting position B-0, position B-2 for removal of moldings, post-removal retract position B-3, and removal confirmation position B-4 are set and taught.

In the case of the second pattern, the start position A, approach waiting position B-0, removal waiting position B-1, position B-2 for removal of moldings, post-removal retract position B-3, and removal confirmation position B-4 are set and taught.

In the case of the third pattern, the start position A, approach waiting position B-0, position B-2 for removal of moldings, and removal confirmation position B-4 are set and taught.

Based on the data taught in this way, a motion program of the robot is prepared as described later.

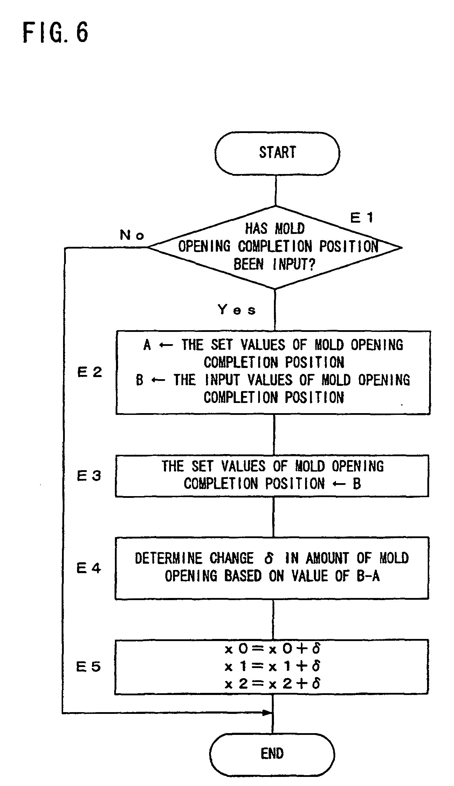

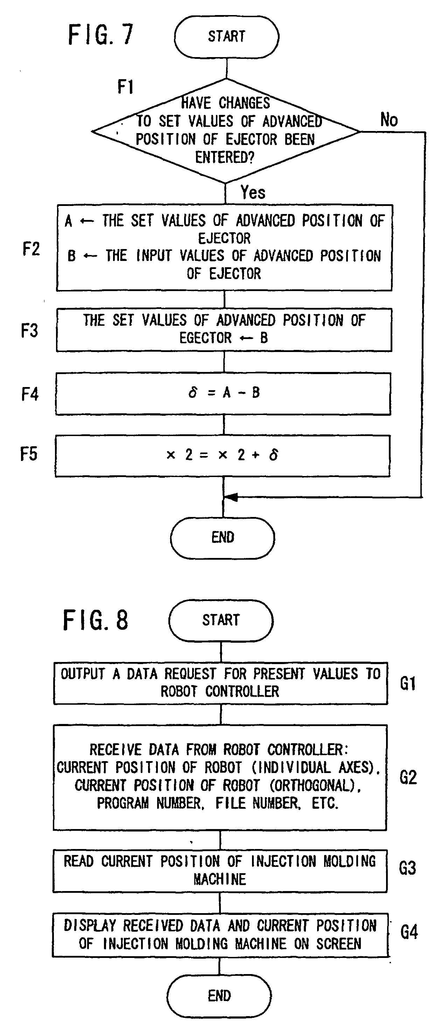

During the removal of a moldings from a mold; when the mold opens and the ejector pushes out the molding, the robot grips and takes out the molding. Therefore, even when each parameter of removal pattern is set, any changes in the set values of the mold opening position (mold opening completion position) or ejector knock-out position (advanced position of the ejector) may affect the parameters that represents the positions in the removal pattern. In that case, it is desirable to change the affected parameters. FIG. 6 shows the process of removal pattern parameter changes needed in case of changes in the mold opening completion position. FIG. 7 is a flow chart of the parameter change process needed in case of changes in the advanced position of the ejector.

When the operator calls the setting screen for the mold opening process on the display unit 13 and enters a new position to change the mold opening completion position, by operating the input means 14, the processor executes the processing shown in FIG. 6 automatically.

Specifically, when the operator enters a change of the set value of the mold opening completion position (Step E1), the processor stores the old set value in a register A and stores the newly entered set value in a register B (Step E2). It sets the input value stored in the register B as the new mold opening completion position (Step E3) and subtracts the value of the register A from the value of the register B to determine the amount of change in the set value, i.e., the change δ in the mold opening amount(Step E4). Then, the processor adds the above described change δ to the X coordinate value x0 of the approach waiting position B-0, X coordinate value x1 of the removal waiting position B-1 (in the case of the second pattern only), and X coordinate value x2 of the position B-2 for removal of moldings to calculate their new coordinate values x0, x1, and x2 (Step E5) and finishes the process of removal pattern parameter changes associated with changes in the mold opening completion position.

No parameter change is made for the post-removal retract position B-3 and removal confirmation position B-4, which are not affected by changes in the mold opening completion position. Although the X coordinate value x0 of the approach waiting position B-0, X coordinate value x1 of the removal waiting position B-1, and X coordinate value x2 of the position B-2 for removal of moldings are changed in the example of FIG. 6, it is not always necessary to change all of them.

For example, if the mold opening completion position is changed to a larger value (i.e., changes are made so that the mold will be opened more widely), it is enough to change only the position B-2 for removal of moldings. Normally, the end effector of the mold will not hit the mold or the like during its travel from the approach waiting position B-0 to the position B-2 for removal of moldings and thus it is enough to change only the position B-2 for removal of moldings.

However, if the second removal motion pattern is selected, changing only the X coordinate value x2 of the position B-2 for removal of moldings will increase the travel distance from the removal waiting position B-1 to the position B-2 for removal of moldings by the change δ, requiring longer time for removal and thus resulting in a longer cycle time. Therefore, it is advisable to change the X coordinate values of the approach waiting position B-0, removal waiting position B-1, and position B-2 for removal of moldings even when the mold opening completion position is changed to a larger value. Conversely, if the mold opening completion position is changed to a smaller value, it is desirable to change the X coordinate values of the three points: the approach waiting position B-0, removal waiting position B-1, and position B-2 for removal of moldings, because the position of the platen comes near the robot removal path.

When the mold opening completion position is changed to a smaller value (i.e., in the mold clamping direction), if the amount of the change is large, the X coordinate value x2 of the position B-2 for removal of moldings after the change may be closer to the mold-clamping side (right-hand side in FIGS. 14 and 15) than the X coordinate value x3 of the post-removal retract position B-3 or the X coordinate value x4 of the removal confirmation position B-4. This means that x3 > x2 + δ (where δ < 0). In this situation, the end effector may hit the mold while it is ascending (moving from the position B-2 for removal of moldings through the post-removal retract position B-3 and removal confirmation position B-4 to the start position A) after mold removal. To avoid this situation, a limit may be placed on the amount of change in mold opening, especially on the amount of change in the direction of mold clamping. It is also possible to display a message prompting the operator to reconsider the entire removal path followed by the robot if the amount of change in the mold opening completion position exceeds a certain value.

When the operator displays an ejection process setting screen on the display unit and enters a change to the set values of the advanced position of the ejector in the ejection process, by operating the input means 14, the processor automatically starts the process of removal pattern parameter changes shown in the flow chart of FIG. 7.

Specifically, when the operator enters a change to the set value of the advanced position of the ejector (Step F1), the processor stores the old set value of the advanced position of the ejector (Step F4) in the register A and stores the newly entered value in the register B (Step F2). It sets the input value stored in the register B as the advanced position of the ejector (Step F3) and subtracts the value of the register B from the value of the register A to determine the amount of change in the set value, i.e., the change δ in the advanced position of the ejector (Step F4). Then, the processor changes the X coordinate value x2 of the position B-2 for removal of moldings by the change δ in the advanced position of the ejector (Step F5) and finishes this process.

When the advanced position of the ejector is changed, since the position of the platen at the completion of mold opening does not change, it is advisable not to change the approach waiting position B-0 or removal waiting position B-1. When the advanced position of the ejector is shifted in the advance direction of the ejector, (i.e., in the mold clamping direction), if the amount of the change is large, a situation represented by x3 > x2 + δ (where δ < 0) or x1 > x2 + δ (where δ < 0) may result as is the case when the mold opening completion position is shifted in the mold clamping direction. To avoid this situation, a limit can be placed on the amount of change in the advanced position of the ejector, especially on the amount of change in the direction of the advanced position of the ejector. It is also possible to display a message prompting the operator to reconsider the entire removal path followed by the robot if the amount of change in the advanced position of the ejector exceeds a certain value. [Travel patterns]

If the Travel button is pressed in Step B7, the Travel Pattern screen shown in FIG. 16 appears (Step B8) and displays the transport patterns of the moldings removed from a mold. This embodiment assumes that there are four patterns and displays them as well as diagrams 61 that represent the movement zones of the mold and end effector of the robot in relation to each other.

Point A indicates the position where molding removal is completed according to a moldings removal pattern while points B, C, and D represents the discharge positions of moldings or runners. The first travel pattern comprises a travel from the completion position A of molding removal to point B where the molding is released from the end effector and discharged. The second travel pattern comprises a travel from the removal completion position A to point D where runners are removed and then a travel to point B where the molding is discharged. The third travel pattern comprises a travel from the removal completion position A to point C where the molding is discharged. The fourth travel pattern comprises a travel from the removal completion position A to point C where the molding is discharged and then a travel to point B where runners are discharged.

When the operator selects one of the travel patterns with the appropriate command button 42, a parameter setting area 60 appears and displays the coordinate position and travel speed parameters necessary for the selected pattern, prompting the operator to enter parameter values. In the example of FIG. 16, where the first pattern has been selected, the operator is prompted to enter the position (X, Y, Z) of point B and travel speed from the removal completion point A to point B. In relation to travel patterns, the operator is also asked to specify whether to cut off gates and whether to palletize the moldings that are collected after removal.

### [Gate cutting patterns]

When the operator presses the Gate mode selection button 41, the Gate Cutting Pattern screen shown in FIG. 17 is displayed on the display unit 13. This embodiment assumes that there are four gate cutting patterns and displays four patterns, which involves one, two, or four gate cutting positions.

The first pattern, involves making a cut at one position C1 located in the horizontal direction (X-axis direction) from the sprue position (origin O). The second pattern involves making cuts at two positions at two positions C1 and C2 located in the horizontal direction (X-axis direction) from the sprue position. The third pattern involves making cuts at four positions, two sets of C1 and C2, located in the horizontal direction (X-axis direction) from O1 and O2, respectively, which in turn are located in the vertical direction (Z-axis direction) from the sprue position (origin O). The fourth pattern involves making cuts at four in the directions different from those in the third pattern at two positions located in the horizontal direction (X-axis direction) and two positions located in the vertical direction (Z-axis direction) from the sprue position (origin O).

When the operator selects a pattern with an appropriate command button 42, the parameter setting area 60 appears and displays the parameters needed to identify the selected pattern, prompting the operator to enter parameter values. In the example of FIG. 17, where the second pattern has been selected, the operator should enter the distances (including a sign) from the sprue position (origin) to points C1 and C2. The operator should also enter the operating time of the gate cutting means.

### [Palletizing patterns]

When the operator presses the Palletizing mode selection button 41, the Palletizing Pattern screen shown in FIG. 18 appears. This screen is used to set a palletizing pattern for use in placing the moldings removed from the injection molding machine 10 on pallets. This embodiments proposes three patterns.

The first pattern is single-rank palletizing. The parameters that need to be specified include the palletizing interval L1 (file spacing), number of files, and number of pallet stacks in the rank. The second pattern is double-rank palletizing. The parameters that need to be specified include the file spacing L1, rank spacing L2, number of files, and number of pallet stacks. The third pattern allows the numbers of files and ranks to be specified freely. In the example of FIG. 18, the third pattern has been selected. The parameters that need to be specified include file spacing L1, rank spacing L2, number of files, number of ranks, number of pallet stacks, and height of a pallet stack. The third pattern also allows the selection of a palletizing direction between the file direction and rank direction. Examples are shown graphically and File Mode and Rank Mode command buttons 42 are provided for selecting this direction.

### [Insert patterns]

When the operator presses the Insert mode selection button, the screen shown in FIG. 19 appears and displays a drawing of a mold, a parameter setting area, and command buttons 42 for selecting either movable or stationary mold half on which the insert is to be mounted, prompting the operator to select the movable or stationary mold half and enter the number of inserts to be mounted and coordinate positions of the inserts.

### [Processing for each pattern]

When the operator selects a robot motion necessary for the selected mold, selects a motion pattern of the selected robot motion, enters values for necessary parameters, and presses the Mold mode selection button 41 (Step B10), the display screen of the display unit 13 switches to the Mold Database screen shown in FIG. 12 (Step B11). The processor checks repeatedly whether the Register command button 42 is pressed or not and whether any of the mode selection button 41 is pressed or not (Steps B6 and B7).

If the operator further presses another mode selection button 41 to specify another necessary motion, the processor repeats Steps B8 to B10 described above, prompts the operator to set necessary parameters for the selected motion, and stores the set values.

When the operator enters numeric values for the parameters of the required motion pattern, the processor displays the Mold Database screen. Then if the operator presses the Register command button 42, the processor in the controller 12 of the injection molding machine detects the press of the button in Step B6 and goes to Step B12.

Based on the selected kind pattern of the specified motion pattern and parameter information that identifies the motion pattern, the processor generates a robot motion program automatically and stores it in the nonvolatile memory within the controller 12 of the injection molding machine. If the operator changes a program by processing the Change motion selection button, the processor writes the changed program over the old program. If a new program is generated, it is stored in the nonvolatile memory.

In generating the program automatically, the processor checks whether the motion program necessary for the molding removal motion can be created properly or not (Step B13). If it cannot, the processor displays an alarm message on the current screen, Mold Database screen (Step B14), and returns to Step B7.

Specifically, when a removal motion pattern is specified, a travel pattern must always be specified, and if no travel pattern is specified or if no gate cutting motion pattern or palletizing motion pattern is specified even though Gate Cutting or Palletizing is set to "Yes" in travel pattern setting (See FIG. 16), the processor displays an alarm message in Step B14 and goes to Step B7 so that the lacking motion patterns can be specified.

On the other hand, if no alarm condition is encountered when creating a program of a specified motion pattern, the processor goes from Step B13 to B15 where it checks whether a program number has already been assigned to this motion pattern or not. If the operator pressed Change command button 42 in Step B5 to change a registered program, selected a motion pattern, and set parameters, a program number should have already been assigned to the old motion pattern program. However, if the operator selected and specified a motion pattern by pressing the New command button, no program number has been assigned yet. Thus, the processor assigns a program number automatically to the program stored in Step B12 and registers this program number under the selected mold in the mold database (Step B16). This associates the mold with the robot motion program. The nonvolatile memory that stores this mold database constitutes a means for associating programs with molds. Then, the processor sends the registered program to the robot controller 22 through the Ethernet L.

If a program number has already been assigned in Step B15, the motion program stored under this program number is sent to the robot controller 22 through the Ethernet L.

The robot controller 22 installs the motion program received through the Ethernet to drive and control the working part 21 of the robot according to this program.

In the embodiment described above, motion programs of the robot are created on the controller 12 of the injection molding machine, based on the set data of various parameters that define motion patterns of the robot. However, the motion programs of the robot can also be created on the robot controller 22. In that case, when a press of the Register button is detected in Step B6 in FIG. 3, the data on the set values of the parameters for the various motion patterns specified is sent to the robot controller 22 through the Ethernet L. Then, Step B12 and subsequent steps in FIG. 3 are performed by the robot controller 22. In Step B 14, a signal is sent to the controller 12 of the injection molding machine, requesting it to display an alarm message so that Step B7 and subsequent steps will be performed by the controller 12 of the injection molding machine. The check in Step B15 becomes unnecessary. Also, instead of Steps B16 and B17, a program created on the robot controller 22 is sent to the controller 12 of the injection molding machine. The controller 12 of the injection molding machine registers the received program under the selected mold stored in the mold database. If a robot motion program itself is sent to the robot controller 22 at the transfer command in Step B3, the robot controller 22 installs this program as it is, for robot operation.

### [Monitoring processing]

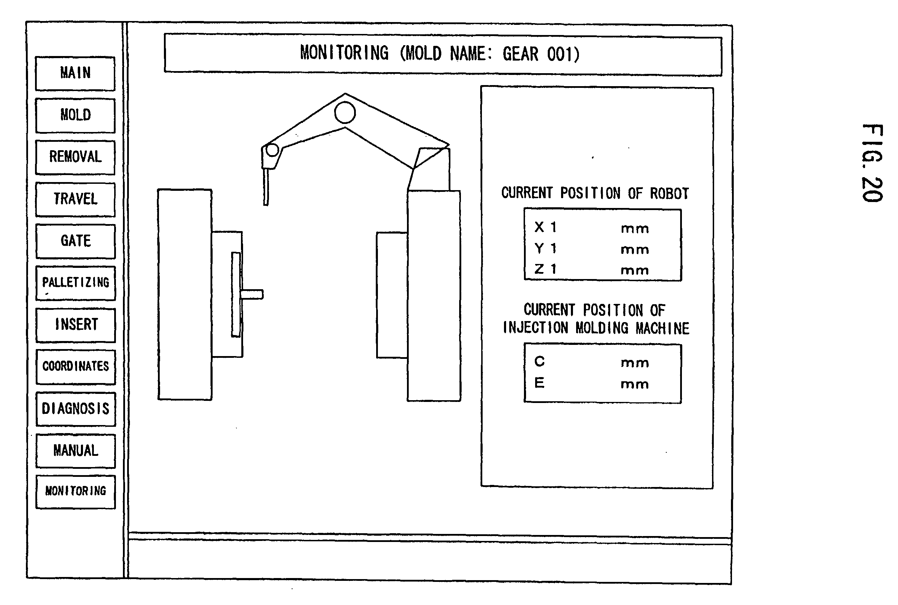

To monitor the operational status of the robot during the operation of the injection molding machine 10 and robot 20, the operator should press the Monitor mode selection button 41. Then, the display unit 13 displays the open/closed status of the mold and operating state of the robot as shown in FIG. 20 and the processor initiates the processing shown in FIG. 8 every predetermined period.

First, a data request for present values is output to the robot controller 22 through the Ethernet L (Step G1). In response, the robot controller 22 sends various data on the current state of the robot operation including the current positions of robot axes, the position of the TCP in the robot coordinate system (orthogonal coordinates in the user coordinate system which was set in advance), program number, and number of lines in the program to the controller 12 of the injection molding machine. The processor in the controller 12 of the injection molding machine receives and stores these data (Step G2) and read the present values of the injection molding machine (Step G3). What is related to both the condition of the robot 20 and condition of the injection molding machine 10 includes the position of the movable platen (the position of the movable half) in the mold clamping mechanism and the position of the ejector that forces out moldings. Their current positions are detected (Step G3).

The processor in the controller 12 of the injection molding machine displays the received current position of the robot, the position (C) of the movable mold half of the injection molding machine, and the current position of the ejector position (E). It also draws animation of the robot and draws animation of the current position and posture of the robot, position of the movable platen, etc. (Step G4) based on the received and detected current positions. Subsequently, the processor executes this processing every predetermined period to allow the operating states of the robot and injection molding machine to be monitored on the display unit 13 in the controller of the injection molding machine.

### [Manual operation of robot]

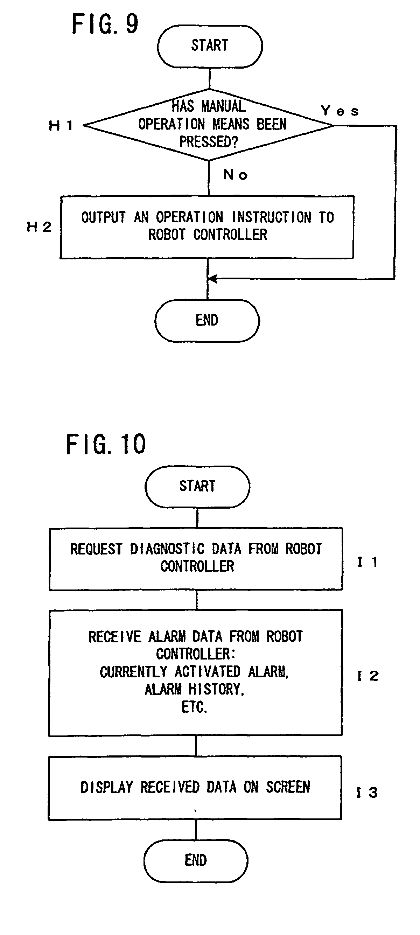

If the operator presses the Manual mode selection button 41 to feed the robot manually, the processor executes the processing shown in FIG. 9 every predetermined. It checks if manual operation means such as a jog feed button installed on the control panel 15 of the injection molding machine 10 for giving a manual feed instruction has been pressed (Step H1). If no such button has been pressed, the processor terminates this cycle of processing immediately. If such a button has been pressed, the processor sends an instruction to feed the robot manually in the direction specified by the manual operation means to the robot controller 22 through the Ethernet L (Step H2) and finishes this cycle of processing. Subsequently, the processor repeats this processing every predetermined period.

On the other hand, upon receiving the manual feed instruction through the Ethernet L, the processor in the robot controller 22 moves the working part 21 of the robot in the specified direction at a specified speed as is the case when the instruction is given by the manual operation means of the robot controller 22.

Thus, the manual feed of the robot can be controlled from the control panel 15 on the controller 12 of the injection molding machine. The robot 20 moves while the button of the manual operation means is being pressed and stops when the button is released. In this respect, this operation is the same as the operation from the control panel on the robot controller 22.

### [Diagnosis of robot]

In the case where the robot issues an alarm and stops, if the operator presses the Diagnosis mode selection button 41, the processor in the controller 12 of the injection molding machine performs the processing shown in FIG. 10.

First, the processor sends a diagnostic-data request signal to the robot controller 22 through the Ethernet L (Step I1). Then, the robot controller 22 reads information about the currently activated alarm and the alarm history information stored in memory and sends them to the controller 12 of the injection molding machine through the Ethernet L in response. The processor in the controller 12 of the injection molding machine receives the currently activated alarm and alarm history (Step I2) and displays this information on the display unit 13 (Step I3).

In the embodiment described above, an injection molding machine is taken as an example of the machine equipped with a robot and moldings and inserts are used as examples of the work handled by the robot. However, the present invention can also be applied to machines other than injection molding machines. When it is applied to machine tools, general industrial machinery, or the like equipped with a robot, their work can be a work piece to be processed on them, parts assembled into such work piece, etc.

Besides, as input means on the display unit, the embodiment described above uses a touch panel. Instead of the touch panel, however, it is also possible to use publicly known methods such as a method of pointing and selecting teach points or buttons on screen by using a touch pen or mouse pointer.

## Claims

1. A robot and machine linked system, comprising:
a machine (10) which has a controller (12) and display/input means (13); a robot (21) which has a controller (22) and is installed on or arranged near said machine (10); and
communication means (L) which connects the controller (22) of said robot (21) and the controller (12) of said machine (10);
**characterised in that** the controller (12) of said machine (10) has the capability to create or change robot programs which are located in the machine controller (12) or in the robot controller (22), which robot programs are to control the robot (21) from the robot controller (22), and has robot operation pattern selecting means (49) for selecting any one of a plurality of movement patterns of an end effector, of the robot (21), which are set in advance, and a display device to display the selected moving pattern.

2. The system according to claim 1, wherein the controller (12) of said machine (10) has the capability to transfer robot programs created or changed on the controller (12) of the machine (10) to the controller (22) of the robot (21) via said communication means (L).

3. The system according to claim 1, wherein said display/input means (13) of said machine (10) is operable to enter data to be incorporated into robot programs into the controller (12) of said machine (10), and the controller (12) of the machine (10) is operable to transfer the entered data to the controller (22) of the robot (21) via said communication means (L), to enable the controller (22) of the robot (21) to create or change programs based on said data.

4. The system according to claim 1, 2 or 3, wherein said machine is provided with a control panel (15) containing manual keys or buttons for moving the robot manually.

5. The system according to any one of claims 1 to 4, wherein said machine (10) has additionally parameter setting means for specifying a parameter selected by said robot operation pattern selecting means (49).

6. The system according to any preceding claim, wherein said machine (10) is an injection molding machine.

7. The system according to claim 6, wherein said display/input means (13) provided with said injection molding machine comprises means for displaying pictures that represent molds and pictures that represent platens, means for selecting robot teach points displayed on said display/input means, and input means for entering the coordinate values of the teach points selected.

8. The system according to claim 7, wherein said input means for entering the coordinate values involves entering numeric values.

9. The system according to claim 7, wherein said means for entering the coordinate values allows indicating of the locations of teach points on a screen with a touch pen or mouse pointer and entering of the coordinate values based on the indicated locations on the screen.

10. The system according to claim 7, wherein said means for.entering the coordinate values involves indicating of the locations of teach points on a screen with a touch panel mounted on said display/input means and entering of the coordinate values based on the indicated locations of the teach points on the screen.

11. The system according to any of claims 7 to 10, wherein said means for entering the coordinate values allows moving of said teach points on the screen and entering of the coordinate values based on the locations of the teach points on the screen.

12. The system according to any of claims 7 to 11, wherein said means for entering the coordinate values allows moving of the robot and entering of the coordinate values of the current position of the robot.

13. The system according to any one of claims 7 to 12, wherein the controller of said machine comprises means for setting a mold opening completion position and means for changing a molding removal position of said robot in accordance with the amount of change in the set values of the mold opening completion position.

14. The system according to any one of claims 7 to 13, wherein the controller of said machine comprises means for setting an advanced position of an ejector and means for changing a molding removal position of said robot in accordance with the amount of change in set values of the advanced position of the ejector.

## Patentansprüche

1. Roboter/Maschinen-Verbund-System, das umfasst:
eine Maschine (10), die eine Steuereinrichtung (12) und ein Anzeige/Eingabe-Mittel (13) hat,
einen Roboter (21), der eine Steuereinrichtung (22) hat und an der Maschine (10) angebracht oder nahe derselben angeordnet ist, und
ein Kommunikations-Mittel (L), das die Steuereinrichtung (22) des Roboters (21) und die Steuereinrichtung (12) der Maschine (10) verbindet,
**dadurch gekennzeichnet, dass**
die Steuereinrichtung (12) der Maschine (10) die Fähigkeit hat, Roboter-Programme zu erstellen oder solche zu ändern, die in der Maschinen-Steuereinrichtung (12) oder in der Roboter-Steuereinrichtung (22) vorliegen, welche Roboter-Programme dazu bestimmt sind, den Roboter (21) von der Roboter-Steuereinrichtung (22) aus zu steuern, und
ein Roboterbetriebsmuster-Auswahlmittel (49) zum Auswählen irgendeines einer Vielzahl von Bewegungsmustern eines End-Wirkorgans des Roboters (21), die vorab gesetzt sind, und eine Anzeigeeinrichtung zum Anzeigen des ausgewählten Bewegungsmusters hat.

2. System nach Anspruch 1, wobei die Steuereinrichtung (12) der Maschine (10) die Fähigkeit hat, Roboter-Programme, die in der Steuereinrichtung (12) der Maschine (10) erstellt oder geändert sind, über das Kommunikations-Mittel (L) zu der Steuereinrichtung (22) des Roboters (21) zu übertragen.

3. System nach Anspruch 1, wobei das Anzeige/Eingabe-Mittel (13) der Maschine (10) betriebsfähig ist, in die Roboter-Programme aufzunehmende Daten in die Steuereinrichtung (12) der Maschine (10) einzugeben, und die Steuereinrichtung (12) der Maschine (10) betriebsfähig ist, die eingegebenen Daten über das Kommunikations-Mittel (L) zu der Steuereinrichtung (22) des Roboters (21) zu übertragen, um die Steuereinrichtung (22) des Roboters (21) in die Lage zu versetzen, Programme auf der Grundlage der Daten zu erstellen oder zu ändern.

4. System nach Anspruch 1, 2 oder 3, wobei die Maschine mit einem Steuerschaltfeld (15) versehen ist, das von Hand zu betätigende Tasten oder Knöpfe zum Bewegen des Roboters durch Steuern von Hand enthält.

5. System nach einem der Ansprüche 1 bis 4, wobei die Maschine (10) zusätzlich Parameter-Einstellmittel zum Bestimmen eines Parameters hat, der durch das Roboterbetriebsmuster-Auswahlmittel (49) ausgewählt wird.

6. System nach einem der vorhergehenden Ansprüche, wobei die Maschine (10) eine Spritzgieß-Maschine ist.

7. System nach Anspruch 6, wobei das Anzeige/Eingabe-Mittel (13), das mit der Spritzgieß-Maschine vorgesehen ist, Mittel zum Anzeigen von Bildern, die Formen repräsentieren, und von Bildern, die Platten repräsentieren, Mittel zum Auswählen von Roboter-Einlernpunkten, die auf einem Bildschirm des Anzeige/Eingabe-Mittels angezeigt werden, und ein Eingabemittel zum Eingeben der Koordinaten-Werte der ausgewählten Einlernpunkte umfasst.

8. System nach Anspruch 7, wobei das Mittel zum Eingeben der Koordinaten-Werte das Eingeben numerischer Werte betrifft.

9. System nach Anspruch 7, wobei das Mittel zum Eingeben der Koordinaten-Werte das Anzeigen der Orte von Einlernpunkten auf dem Bildschirm mit einem Berührungsstift oder mit einem Mauszeiger und das Eingeben der Koordinaten-Werte auf der Grundlage der auf dem Bildschirm angezeigten Orte gestattet.

10. System nach Anspruch 7, wobei das Mittel zum Eingeben der Koordinaten-Werte das Anzeigen der Orte von Einlernpunkten auf dem Bildschirm mit einem Berührungsfeld, das auf dem Anzeige/Eingabe-Mittel montiert ist, und das Eingeben der Koordinaten-Werte auf der Grundlage der auf dem Bildschirm angezeigten Orte der Einlernpunkte betrifft.

11. System nach einem der Ansprüche 7 bis 10, wobei das Mittel zum Eingeben der Koordinaten-Werte das Bewegen der Einlernpunkte auf dem Bildschirm und das Eingeben der Koordinaten-Werte auf der Grundlage der Orte der Einlernpunkte auf dem Bildschirm gestattet.

12. System nach einem der Ansprüche 7 bis 11, wobei das Mittel zum Eingeben der Koordinaten-Werte das Bewegen des Roboters und das Eingeben der Koordinaten-Werte der gegenwärtigen Position des Roboters gestattet.

13. System nach einem der Ansprüche 7 bis 12, wobei die Steuereinrichtung der Maschine Mittel zum Setzen einer Formöffungs-Abschlussposition und Mittel zum Ändern einer Form-Entfernungsposition des Roboters in Übereinstimmung mit dem Betrag der Änderung der gesetzten Werte der Formöffungs-Abschlussposition umfasst.

14. System nach einem der Ansprüche 7 bis 13, wobei die Steuereinrichtung der Maschine Mittel zum Setzen einer Vorbewegungsposition eines Auswerfers und Mittel zum Ändern einer Form-Entfernungsposition des Roboters in Übereinstimmung mit dem Betrag der Änderung der gesetzten Werte der Vorbewegungsposition des Auswerfers umfasst.

## Revendications

1. Un système de couplage d'un robot et d'une machine, comprenant :
une machine (10) qui présente un organe de commande (12) et des moyens d'affichage/entrée (13) ;
un robot (21) qui présente un organe de commande (22) et est monté sur ou disposé près de ladite machine (10) ; et
des moyens de communication (L) qui relient l'organe de commande (22) dudit robot (21) et l'organe de commande (12) de ladite machine (10) ;
**caractérisé en ce que** l'organe de commande (12) de ladite machine (10) a la capacité de créer ou de modifier des programmes de robot qui sont situés dans l'organe de commande (12) de la machine ou dans l'organe de commande (22) du robot, lesquels programmes de robot sont prévus pour commander le robot (21) à partir de l'organe de commande (22) du robot, et comprennent des moyens de sélection de motifs de fonctionnement de robot (49) pour sélectionner l'un quelconque d'une pluralité de motifs de mouvement d'un effecteur final du robot (21), lesquels sont réglés par avance, et un dispositif d'affichage pour afficher le motif de mouvement sélectionné.

2. Le système selon la revendication 1, dans lequel l'organe de commande (12) de ladite machine (10) a la capacité de transférer des programmes de robot créés ou modifiés sur l'organe de commande (12) de la machine (10) vers l'organe de commande (22) du robot (21) par l'intermédiaire desdits moyens de communication (L).

3. Le système selon la revendication 1, dans lequel lesdits moyens d'affichage/entrée (13) de ladite machine (10) sont actionnables pour introduire, dans l'organe de commande (12) de ladite machine (10), des données devant être incorporées dans des programmes de robot, et l'organe de commande (12) de la machine (10) est actionnable pour transférer, par intermédiaire desdits moyens de communication (L), les données introduites dans l'organe de commande (22) du robot (21), afin de permettre à l'organe de commande (22) du robot (21) de créer ou de modifier des programmes sur la base desdites données.

4. Le système selon la revendication 1, 2 ou 3, dans lequel ladite machine est munie d'un panneau de commande (15) contenant des touches ou des boutons manuels pour déplacer manuellement le robot.

5. Le système selon l'une quelconque des revendications 1 à 4, dans lequel ladite machine (10) présente supplémentairement des moyens de réglage de paramètres pour spécifier un paramètre sélectionné par lesdits moyens de sélection de motifs de fonctionnement de robot (49).

6. Le système selon l'une quelconque des revendications précédentes, dans lequel ladite machine (10) est une machine de moulage par injection.

7. Le système selon la revendication 6, dans lequel lesdits moyens d'affichage/entrée (13) prévus en liaison avec ladite machine de moulage par injection comprennent des moyens pour afficher des images qui représentent des moules et des images qui représentent des platines, des moyens pour sélectionner des points d'enseignement de robot affichés sur lesdits moyens d'affichage/entrée, et des moyens d'entrée pour introduire les valeurs de coordonnées des points d'enseignement sélectionnés.

8. Le système selon la revendication 7, dans lequel lesdits moyens d'entrée pour introduire les valeurs de coordonnées impliquent l'introduction de valeurs numériques.

9. Le système selon la revendication 7, dans lequel lesdits moyens pour introduire les valeurs de coordonnées permettent d'indiquer les emplacements de points d'enseignement sur un écran à l'aide d'un pointeur à crayon toucheur ou à souris et d'introduire les valeurs de coordonnées sur la base des emplacements indiqués sur l'écran.

10. Le système selon la revendication 7, dans lequel lesdits moyens pour introduire les valeurs de coordonnées impliquent l'indication des emplacements de points d'enseignement sur un écran à l'aide d'un panneau toucheur monté sur lesdits moyens d'affichage/entrée et l'introduction des valeurs de coordonnées sur la base des emplacements indiqués des points d'enseignement sur l'écran.

11. Le système selon l'une quelconque des revendications 7 à 10, dans lequel lesdits moyens pour introduire les valeurs de coordonnées permettent de déplacer lesdits points d'enseignement sur l'écran et d'introduire les valeurs de coordonnées sur la base des emplacements des points d'enseignement sur l'écran.

12. Le système selon l'une quelconque des revendications 7 à 11, dans lequel lesdits moyens pour introduire les valeurs de coordonnées permettent de déplacer le robot et d'introduire les valeurs de coordonnées de la position actuelle du robot.

13. Le système selon l'une quelconque des revendications 7 à 12, dans lequel l'organe de commande de ladite machine comprend des moyens pour régler une position de fin d'ouverture de moule et des moyens pour modifier une position de retrait de moulage dudit robot en accord avec la quantité de modification des valeurs réglées de la position de fin d'ouverture de moule.

14. Le système selon l'une quelconque des revendications 7 à 13, dans lequel l'organe de commande de ladite machine comprend des moyens pour régler une position avancée d'un éjecteur et des moyens pour modifier une position de retrait de moulage dudit robot en accord avec la quantité de modification des valeurs réglées de la position avancée de l'éjecteur.
